# EUROPEAN PATENT SPECIFICATION

(11) **EP 2 853 077 B1**
(45) Date of publication and mention of the grant of the patent: **25.03.2020**
(21) Application number: 13732002.4
(22) Date of filing: 06.06.2013
(51) Int. Cl.: H04L 29/08, H04L 12/725

(54) **METHOD OF SEAMLESS INTEGRATION AND INDEPENDENT EVOLUTION OF INFORMATION-CENTRIC NETWORKING VIA SOFTWARE DEFINED NETWORKING**
VERFAHREN ZUR NAHTLOSEN INTEGRATION UND UNABHÄNGIGEN EVOLUTION VON INFORMATIONSZENTRIERTER VERNETZUNG ÜBER EINE SOFTWAREDEFINIERTE VERNETZUNG
PROCÉDÉ D'INTÉGRATION TRANSPARENTE ET D'ÉVOLUTION INDÉPENDANTE D'UN RÉSEAUTAGE CENTRÉ SUR L'INFORMATION PAR L'INTERMÉDIAIRE D'UN RÉSEAUTAGE DÉFINI PAR LOGICIEL

(30) Priority: 06.06.2012 US 201261656183 P
(43) Date of publication of application: 01.04.2015
(73) Proprietor: Huawei Technologies Co., Ltd., Longgang District Shenzhen, Guangdong 518129 (CN)
(72) Inventor: XIE, Haiyong, Union City, California 94587 (US); ZOU, Ting, Cupertino, California 95014 (US)
(74) Representative: Pfenning, Meinig & Partner mbB
(86) International application number: PCT/US2013/044555
(87) International publication number: WO 2013/184941

(56) References cited:
- EP-A1- 2 120 402
- EP-A1- 2 416 542
- US-A1- 2003 099 237
- US-A1- 2012 005 371
- US-A1- 2012 113 893
- Luca Veltri ET AL: "Supporting information-centric functionality in software defined networks", , 13 April 2012 (2012-04-13), pages 1-6, XP055074140, Retrieved from the Internet: URL:http://netgroup.uniroma2.it/Andrea_Det ti/papers/conferences/icn-sdn.pdf [retrieved on 2013-08-05]
- Van Jacobson ET AL: "VoCCN: Voice-over Content-Centric Networks", , 1 December 2009 (2009-12-01), pages 1-6, XP055021147, Retrieved from the Internet: URL:http://conferences.sigcomm.org/co-next /2009/workshops/rearch/papers/Jacobson.pdf [retrieved on 2012-03-07]

## Description

### BACKGROUND

Modern communication and data networks comprise network nodes, such as routers, switches, bridges, and other devices that transport data through the network. Over the years, the telecommunication industry has made significant improvements to the network nodes to support an increasing number of protocols and specifications standardized by the Internet Engineering Task Force (IETF). Creating and coupling the complex network nodes to form networks that support and implement the various IETF standards (e.g., virtual private network requirements) has caused modern networks to become complex and difficult to manage. As a result, vendors and third-party operators seek to customize, optimize, and improve the performance of the interwoven web of network nodes.

A software defined network (SDN) is a network technology that addresses customization and optimization concerns within convoluted networks. SDNs may be Internet Protocol (IP) networks utilizing Transmission Control Protocol/Internet Protocol (TCP/IP) protocols. SDN decouples the data-forwarding capability, e.g., the data plane, from routing, resource, and other management functionality, e.g., the control plane, previously performed in the network nodes. Network nodes that support SDN, e.g., SDN compliant nodes, may be configured to implement the data plane functions, while the control plane functions may be provided by an SDN controller.

Information-centric networks (ICNs) have also emerged as a promising future Internet architecture, which go beyond the existing IP networks, e.g., SDNs, by shifting the communication model from the current host-to-host model, e.g., the Internet model, to the future information-object-to-object model, e.g., the ICN model. As known in the art, ICNs may be implemented on top of existing IP infrastructures e.g., by providing resource naming, ubiquitous caching, and corresponding transport services, or it may be implemented as a packet-level internetworking technology that would cause fundamental changes to Internet routing and forwarding. In ICN, information objects become the first class abstraction for the entities that exist in the communication model. Information objects may have names, and routing to and from such named objects may be based on their names. In ICN, IP addresses may be treated as a special type of name. Users who want to retrieve the information objects do not need to know where they are located, as distinct from current IP networks where users must specify the destination host's IP address when sending out such requests.

The fundamental paradigm shift that resulted by the change of the communication models from host-to-host to object-to-object requires a change to the current IP-based networks. More specifically, the existing network infrastructure may need to be abandoned in order to deploy ICN. Entirely abandoning the existing network infrastructure represents a waste of time, technology, and resources.

Luca Veltri ET AL: "Supporting information-centric functionality in software defined networks", 13 April 2012 (2012-04-13), pages 1-6, XP055074140 describes how coCONET can be implemented over an OpenFlow (the most population SDN instantiation, to date) network and how OpenFlow should be modified to better suit the operations of coCONET and, more in general, of ICN solutions.

Document US 2003/099237 A1 discloses wide-area content-based routing architecture.

Document EP 2416542 A1 states service virtualization over content-centric networks.

Van Jacobson ET AL: "VoCCN: Voice-over Content-centric Networks", 1 December 2009 (2009-12-01), pages 1-6, XP055021147 shows how content-based networking can offer advantages for the full range of Internet applications, if the architecture has certain key properties.

Document US 2012/0113893 A1 discusses a method for enabling traffic acceleration in a mobile telecommunication network.

### SUMMARY

In one embodiment, the disclosure includes a method of transferring data between an SDN and an ICN in accordance with claim 1. These and other features will be more clearly understood from the following detailed description.

### BRIEF DESCRIPTION OF THE DRAWINGS

For a more complete understanding of this disclosure, reference is now made to the following brief description, taken in connection with the accompanying drawings and detailed description, wherein like reference numerals represent like parts.
FIG. 1 is a schematic diagram of a system comprising SDN and an ICN.
FIG. 2 is a schematic diagram of a system showing a first embodiment for transferring data between an SDN and an ICN.
FIG. 3 is a protocol diagram for transmitting data in system from a user through an SDN to an ICN router of an ICN.
FIG. 4 is a schematic diagram of a system showing a second embodiment for transferring data between an SDN and an ICN.
FIG. 5 is a protocol diagram for transmitting data in system from a user through an SDN to an ICN router of an ICN.
FIG. 6 is a flowchart describing preconfiguring an SDN for processing IP/ICN packets.
FIG. 7 is a schematic diagram of an embodiment of a network element.

### DETAILED DESCRIPTION

It should be understood at the outset that although an illustrative implementation of one or more embodiments are provided below, the disclosed systems and/or methods may be implemented using any number of techniques, whether currently known or in existence. The disclosure should in no way be limited to the illustrative implementations, drawings, and techniques described below, including the exemplary designs and implementations illustrated and described herein, but may be modified within the scope of the appended claims .

Disclosed herein are methods, apparatuses, and systems for permitting the transfer of data between one or more SDNs and one or more ICNs. In one embodiment, which may be referred to as a loosely coupled model, the process is carried out using one or more gateway nodes, which serve as interfaces to transfer data between the SDN(s) and ICN(s). These gateway nodes may be configured with dual protocol stacks for processing packets in order to pass data from one network to another according to the respective network's standards. Another embodiment, which may be referred to as a tightly coupled model, configures the SDN controller(s) to identify paths and forwarding rules for transmitting data between the SDN(s) and ICN(s). In one such tightly coupled embodiment, the ICN nodes are configured with dual protocol stacks to function as the primary packet processing devices for configuring data for transmission. In another such tightly coupled embodiment, all SDN nodes are configured with dual protocol stacks. In still another such tightly coupled embodiment, all ICN nodes and SDN nodes are configured with dual protocol stacks.

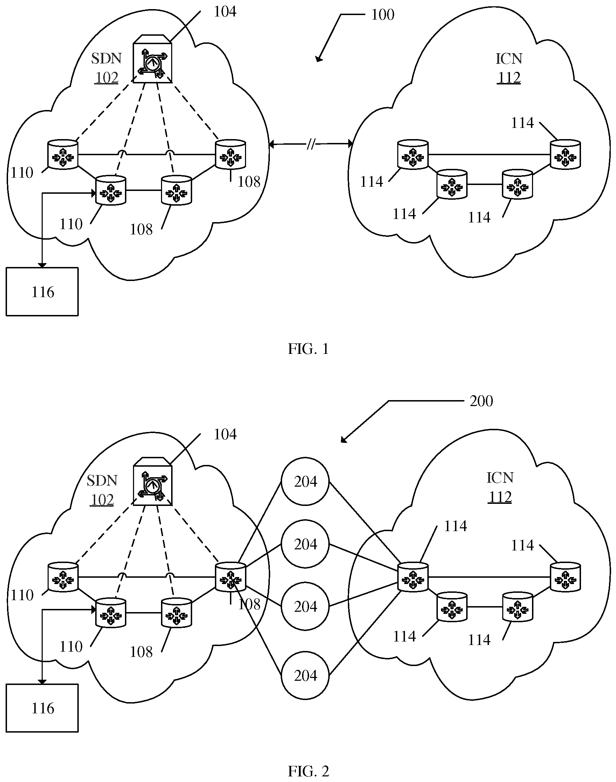

FIG. 1 is a schematic diagram of a system 100 comprising an SDN 102 and an ICN 112. In general, SDNs decouple network control from forwarding and are directly programmable, e.g., by separating the control plane from the data plane and implementing the control plane using software applications and a centralized traffic controller and/or network controller, which may make routing decisions and communicate these decisions to devices on the network. SDNs are well known in the art.

FIG. 1 comprises a central traffic controller or SDN controller 104. The SDN controller 104 may be configured to perform control path and/or control plane functionality, which may include routing and resource management. The SDN controller 104 may communicate with, may monitor, and may control the underlying network components 108 and 110, as shown by the dashed lines. The underlying network components 108 and 110 may exchange data in the manner illustrated, as shown by the solid lines. Network components 108 and 110 may separately be any components configured to receive and/or transmit data through the data network, e.g., routers, switches, servers, etc. Network components 110 may be simple forwarding devices. The network components 108 may function as decision nodes. Decision nodes may possess a cache storing one or more provider addresses or an address at which a content host may be reached to provide specified content. The SDN controller 104 may make decisions on how to assign resources and route different application/information flows through the SDN 102, e.g., through network components 108 and/or 110. Upon receipt of a packet from an application, the decision node may check whether a cache entry contains one or more provider addresses associated with the data requested in the packet to which the packet may be routed. If so, the decision node may route the packet to a selected provider address. If not, the decision node may ask the SDN controller 104 for provider addresses and may update its cache upon receipt thereof. When a second decision node receives a packet from a first decision node, the second decision node may remove the packet header and deliver the packet to the application(s) using the original packet header address.

FIG. 1 further comprises an ICN 112 comprising ICN nodes 114. ICN 112 may provide information dissemination by routing names that identify content objects and services, rather than by location. This allows disassociation of services and resulting content objects from their location. An ICN may include a Forwarding Information Base (FIB), and a content store (CS). Generally, an ICN may work on two primitives: interest and data. An ICN-enabled device may look for the closest copy of content by multicasting the interest packets with the content name into the network. Contents may reside in any host at the producers end, or may be cached in CSs of the ICN routers 114. This caching feature may allow users to retrieve the same content without introducing replicated traffic into the network. As long as some users have retrieved the content, the content may be cached in the network and may be fetched by any number of users. ICNs are well known in the art.

In a system 100 comprising SDN 102 and ICN 112, those of skill in the art will readily perceive that SDN 102 and ICN 112 cannot engage in bidirectional data exchange using present protocols, as illustrated by the broken line connecting SDN 102 and ICN 112. System 100 represents the current state of the art, wherein ICNs are emerging adjacent to legacy SDNs. Thus, an end user 116 in communication with SDN 102 is presently unable to obtain data residing solely on ICN 112 using conventional approaches. Consequently, under conventional approaches, because the SDN and ICNs are not capable of bidirectional data exchange, existing SDN infrastructures, e.g., SDN 102, may need to be abandoned in order to fully deploy ICNs, e.g., ICN 112, and permit end users, e.g., end user 116, to obtain data from the ICN.

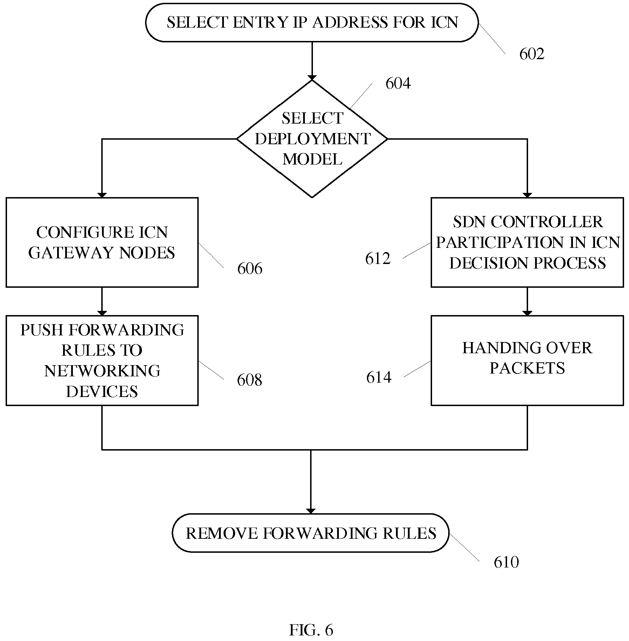

FIG. 2 is a schematic diagram of a system 200 showing a first embodiment for transferring data between an SDN 102 and an ICN 112. Except as otherwise noted, the components of FIG. 2 are substantially the same as the corresponding components of FIG. 1. FIG. 2 further contains access points or gateway nodes 204. Gateway nodes 204 may be in communication with SDN 102, e.g., via SDN node 108, and may be in communication with ICN 112, e.g., via ICN nodes 114, as depicted. Gateway nodes 204 may be configured with dual protocol stacks, an IP protocol stack for communicating with SDN 102 and an ICN protocol stack for communicating with ICN 112. As will be understood by those of skill in the art, SDN controller 104, SDN nodes 108 and/or 110, and/or ICN nodes 114 may be configured with dual protocol stacks in alternate embodiments as needed to carry out a system or method as disclosed herein. Initially, the SDN network components 108 and/or 110 may be pre-loaded with instructions comprising a set of forwarding rules instructing SDN network components 108 and/or 110 how to process packets received or bound for particular destinations or objects, e.g., specific clients, named objects, gateway nodes, or ICN servers, as discussed under FIG. 6.

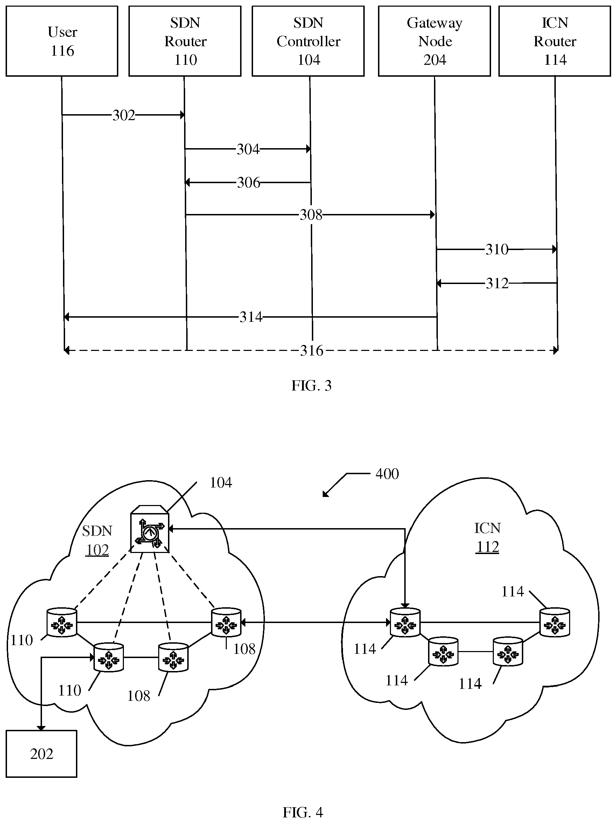

FIG. 3 is a protocol diagram for transmitting data in system 200 of FIG. 2 from a user 116 through an SDN 102 to an ICN router 114 of an ICN 112. The components referenced in FIG. 3 are the same as the corresponding components listed in FIG. 2. The process of FIG. 3 may begin at 302 with a user 116 sending send a request containing an object's name encapsulated in an IP packet to an SDN router 110. The packet may utilize a pre-determined destination IP address that is dedicated for ICN use, e.g., an anycast IP address or an IP address handed out by the network provider when the client subscribes to or registers with the network. If SDN router 110 has forwarding rules for this packet, SDN router 110 may process the packet in accordance with the forwarding rules. If SDN router 110 does not have forwarding rules for this packet, at 304, SDN router 110 may send the packet to SDN controller 104. SDN controller 104 may choose one or more gateway nodes 204 to serve as the interface for transferring data between SDN 406 and ICN 112. At 306, SDN controller 104 may set up or create forwarding rules for reaching the chosen gateway node 204 access point(s) and may push the forwarding rules to the sending SDN router 110. In some embodiments, additional network components 108 and/or 110 also receive the forwarding rules. Once the sending SDN router 110 is configured with the forwarding rules, at 308 the sending SDN router 110 may send the packet to gateway node 204. When gateway node 204 receives the IP packet, gateway node 204 may decapsulate the IP packet using the IP protocol stack, parse the packet to obtain the name of the specified named content, and may find the path to the ICN networking device hosting the specific named content, e.g., ICN router 114. Once the path is identified, gateway node 204 may process the packet using the ICN protocol stack. At 310, gateway node 204 may forward the packet to the ICN networking device, e.g., ICN router 114. At 312, the requested specified named content may be sent from an ICN router 114 to gateway node 204. Gateway node 204 may receive the specified name content, may encapsulate the specified named content in an IP packet, and at 314 may forward the modified packet containing the specified named content to the user 116 via SDN router 110. Dashed line 316 represents any future communications between user 116 and ICN router 114 as enabled by the forwarding rules and the gateway node(s) 204.

FIG. 4 is a schematic diagram of a system 400 showing a second embodiment for transferring data between an SDN 102 and an ICN 112. Except as otherwise noted, the components of FIG. 4 are substantially the same as the corresponding components of FIG. 1. For example, in FIG. 4, SDN controller 104 is configured with dual protocol stacks: an IP protocol stack for communicating with SDN 102 and an ICN protocol stack for communicating with ICN 112. As will be understood by those of skill in the art, in another embodiment SDN network components 108 and/or 110, and/or ICN nodes 114 may alternately or additionally be configured with dual protocol stacks in this manner as needed to carry out a system or method as disclosed herein. FIG. 4 further shows a data path between SDN controller 104 and ICN 112, e.g., via an ICN router 114, as well as a data path between SDN router 108 and ICN router 114.

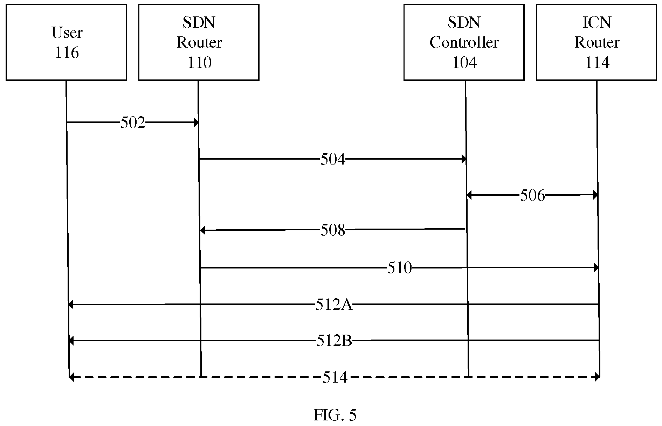

FIG. 5 is a protocol diagram for transmitting data in system 400 from a user 116 through an SDN 102 to an ICN router 114 of an ICN 112. The components of FIG. 5 may be the same as the corresponding components in FIG. 4. At 502, a user 116 may send a request comprising a specifically named content's name, encapsulated in an IP packet, to an SDN router 110. The packet may utilized a pre-determined destination IP address that is dedicated for ICN use, e.g., an anycast IP address or an IP address handed out by the network provider when the client subscribes to or registers with the network. SDN network components 108 and/or 110 may be pre-loaded with instructions comprising a set of forwarding rules instructing SDN network components 108 and/or 110 how to process packets received or bound for particular destinations or objects, e.g., specific clients, named contents and/or objects, gateway nodes, and/or ICN servers, as described further below under FIG. 6. If the SDN router 110 has forwarding rules for this packet, the SDN router 110 may process the packet in accordance with the forwarding rules. If the SDN router 110 does not have forwarding rules for this packet, at 504, the SDN router 110 may send the packet to the SDN controller 104. The SDN controller 104 may decapsulate the IP packet using the IP protocol stack and may parse the packet to obtain the name of the specified named content. At 506, the SDN controller 104 may negotiate a path to the ICN networking device hosting the specific named content, e.g., by communicating with the ICN's name directory at an ICN router 114 to look up possible ICN servers that can satisfy the request. At 508, the SDN controller 104 may set up or create forwarding rules for reaching the chosen access point(s), e.g., ICN router 114, and may push the rules to the SDN router 110. Once received, the SDN router 110 may be configured to forward packets to the ICN 112, e.g., at an ICN router 114, using the forwarding rules. At 510, the SDN router 110 sends the packet to the ICN router 114. In one embodiment, the ICN router 114 may encapsulate the specified named content in an IP packet and at 512A may send the requested specified named content to the user 116 using the SDN 102. In another embodiment, at 512B, the ICN router 114 may send the requested specific named content to an SDN component, e.g., the SDN router 110, where the SDN router 110 may encapsulate the specified named content in an IP packet and forward the modified packet to the user 116. Dashed line 514 represents any future communications between user 116 and the ICN router 114 as enabled by the forwarding rules and the gateway node(s) 204.

FIG. 6 is a flowchart describing preconfiguring an SDN, e.g., SDN 102, for processing IP/ICN packets. At 602, the network may select an anycast IP address, or a particular IP address, as an entry IP address for the ICN. As will be understood by those of skill in the art, anycast may be a network addressing and routing methodology in which datagrams from a single sender are routed to the topologically nearest node in a group of potential receivers, though it may be sent to several nodes, all identified by the same destination address. Once an entry IP address is selected, any packet coming from or destined for the selected IP address may be treated as an ICN request. At 604, the deployment model may be selected, e.g., the deployment model of system 200 or system 400. In embodiments selecting the deployment model of system 200, at 606 the ICN gateway nodes 204 may also be configured. At 608, the SDN controller may push a set of forwarding rules to the network devices, e.g., instructing packets destined for the ICN entry address to be forwarded to one or more gateway nodes 204. The selection of which of the one or more gateway nodes 204 to which to forward packets may be dynamically determined by the load balancing policies, the proximity, or some other factor. At 610, the forwarding rules set up for specific clients/named objects/ICN gateways/ICN servers may be removed by an SDN controller when no packet matches the rules for a specific amount of time, when the communications defined by the rules have been torn down, or when the communications defined by the rules actively expired. In embodiments selecting the deployment model of system 400, at 612 the SDN controllers may actively or passively participate in the control-plane decision process of ICN, e.g., by learning where named objects are and how to reach named objects. At 614, packets may be handed over to the SDN controller where delayed decisions, also referred to as lazy-binding decisions, may be made. At 610, the forwarding rules set up for specific clients/named objects/ICN gateways/ICN servers may be removed by an SDN controller when no packet matches the rules for a specific amount of time, when the communications defined by the rules have been torn down, or when the communications defined by the rules actively expired.

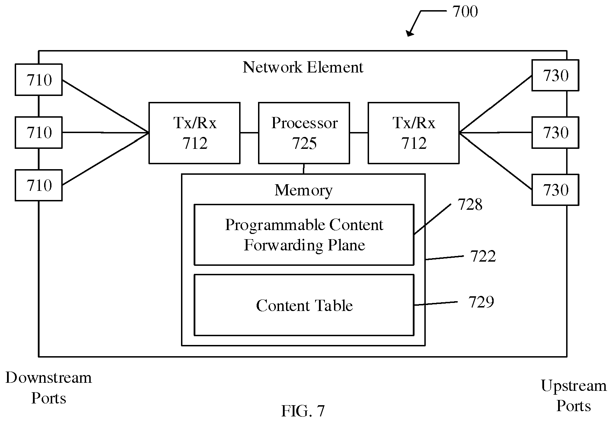

At least some of the features/methods described in the disclosure may be implemented in a network element. For instance, the features/methods of the disclosure may be implemented using hardware, firmware, and /or software installed to run on hardware. The network element may be any device that transports data through a network, e.g., a switch, router, bridge, server, client, etc. FIG. 7 is a schematic diagram of an embodiment of a network element 700, which may be any device that transports and processes data through a network. For instance, the network element 700 may be gateway node 204, network components 108 and/or 110, ICN server 114, and/or SDN controller 104 in the SDN/ICN schemes described above.

The network element 700 may comprise one or more downstream ports or faces 710 coupled to a transceiver (Tx/Rx) 712, which may be transmitters, receivers, or combinations thereof. A Tx/Rx 712 may be coupled to a plurality of downstream ports 710 for transmitting and/or receiving frames from other nodes, a Tx/Rx 712 coupled to a plurality of upstream ports 730 for transmitting and/or receiving frames from other nodes. A processor 725 may be coupled to the Tx/Rxs 712 to process the frames and/or determine the nodes to which to send frames. The processor 725 may comprise one or more multi-core processors and/or memory modules 722, which may function as data stores, buffers, etc. Processor 725 may be implemented as a general processor or may be part of one or more application specific integrated circuits (ASICs) and/or digital signal processors (DSPs). The downstream ports 710 and/or upstream ports 730 may contain electrical and/or optical transmitting and/or receiving components. Network element 700 may or may not be a routing component that makes routing decisions. The network element 700 may also comprise a programmable content forwarding plane block 728. The programmable content forwarding plane block 728 may be configured to implement content forwarding and processing functions, such as at an application layer or layer 3 (L3) in the Open Systems Interconnection (OSI) model, where the content may be forwarded based on content name or prefix and possibly other content related information that maps the content to network traffic. Such mapping information may be maintained in a content table 729 at the memory module 722. The programmable content forwarding plane block 728 may interpret user requests for content and accordingly fetch content, e.g., based on metadata and/or content name, from the network or other content routers and may store the content, e.g., temporarily, in the memory module 722. The programmable content forwarding plane block 728 may then forward the cached content to the user. The programmable content forwarding plane block 728 may be implemented using software, hardware, or both and may operate above the IP layer or layer 2 (L2) in the OSI model. The memory module 722 may comprise a cache for temporarily storing content, e.g., a Random Access Memory (RAM). Additionally, the memory module 722 may comprise a long-term storage for storing content relatively longer, e.g., a Read Only Memory (ROM). For instance, the cache and the long-term storage may include Dynamic random-access memories (DRAMs), solid-state drives (SSDs), hard disks, or combinations thereof. Notably, the memory 722 may be used to house the dual protocol stacks for the ICN(s) and SDN(s).

It is understood that by programming and/or loading executable instructions onto the network element 700, at least one of the processor 725, the cache, and the long-term storage are changed, transforming the network element 700 in part into a particular machine or apparatus, e.g., a multi-core forwarding architecture, having the novel functionality taught by the present disclosure. It is fundamental to the electrical engineering and software engineering arts that functionality that can be implemented by loading executable software into a computer can be converted to a hardware implementation by well-known design rules. Decisions between implementing a concept in software versus hardware typically hinge on considerations of stability of the design and numbers of units to be produced rather than any issues involved in translating from the software domain to the hardware domain. Generally, a design that is still subject to frequent change may be preferred to be implemented in software, because re-spinning a hardware implementation is more expensive than re-spinning a software design. Generally, a design that is stable that will be produced in large volume may be preferred to be implemented in hardware, for example in an ASIC, because for large production runs the hardware implementation may be less expensive than the software implementation. Often a design may be developed and tested in a software form and later transformed, by well-known design rules, to an equivalent hardware implementation in an application specific integrated circuit that hardwires the instructions of the software. In the same manner as a machine controlled by a new ASIC is a particular machine or apparatus, likewise a computer that has been programmed and/or loaded with executable instructions may be viewed as a particular machine or apparatus.

The scope of protection is not limited by the description set out above but is defined by the claims that follow.

While several embodiments have been provided in the present disclosure, it should be understood that the disclosed systems and methods might be embodied in many other specific forms without departing from the scope of the present disclosure. The present examples are to be considered as illustrative and not restrictive, and the intention is not to be limited to the details given herein. For example, the various elements or components may be combined or integrated in another system or certain features may be omitted, or not implemented.

In addition, techniques, systems, subsystems, and methods described and illustrated in the various embodiments as discrete or separate may be combined or integrated with other systems, modules, techniques, or methods without departing from the scope of the present disclosure. Other items shown or discussed as coupled or directly coupled or communicating with each other may be indirectly coupled or communicating through some interface, device, or intermediate component whether electrically, mechanically, or otherwise. Other examples of changes, substitutions, and alterations are ascertainable by one skilled in the art and could be made without departing from the scope disclosed herein.

## Claims

1. A method of transferring data between a software defined network, SDN, and an information-centric network, ICN, that differs from the SDN, wherein the method comprises:
receiving (504), by an SDN controller (104), a request from an SDN node (110) for a specific named content stored on an ICN, wherein the request is encapsulated in an Internet Protocol, IP, packet; wherein the IP packet comprises a pre-determined IP address that is dedicated for ICN communications;
decapsulating, by the SDN controller (104), the IP packet using an IP protocol stack;
parsing, by the SDN controller (104), the request to obtain the name of the specific named content;
finding (506), by the SDN controller (104), a path to an ICN networking device hosting the specific named content using the name;
setting up (508), by the SDN controller (104), forwarding rules for the path;
pushing, by the SDN controller (104), the forwarding rules to the SDN node (110);
sending (510), by the SDN node (110), the request to the ICN networking device (114) using the forwarding rules;
encapsulating, by the ICN networking device (114), the specified named content in an IP packet;
sending (512A), by the ICN networking device (114), the requested specified named content to a user (116) using the SDN (102);
or
sending (512B), by the ICN networking device (114) the requested specified named content to the SDN node (110), where the SDN node (110) encapsulates the specified named content in an IP packet and forwards the modified packet to the user (116) using the SDN (102).

## Patentansprüche

1. Verfahren zum Übertragen von Daten zwischen einem softwaredefinierten Netzwerk (SDN) und einem informationszentrierten Netzwerk (*information-centric network-* ICN), das sich von dem SDN unterscheidet, wobei das Verfahren Folgendes umfasst: Empfangen (504) einer Anforderung von einem SDN-Knoten (110), durch eine SDN-Steuervorrichtung (104), für einen spezifischen benannten Inhalt, der in einem ICN gespeichert ist, wobei die Anforderung in einem Internetprotokoll(IP)paket eingekapselt ist;
wobei das IP-Paket eine vorbestimmte IP-Adresse umfasst, die ICN-Kommunikationen zugeordnet ist;
Entkapseln des IP-Pakets durch die SDN-Steuervorrichtung (104) unter Verwendung eines IP-Protokollstapels;
Analysieren der Anforderung durch die SDN-Steuervorrichtung (104), um den Namen des spezifischen benannten Inhalts zu erhalten;
Finden (506) unter Verwendung des Namens eines Pfads zu einer ICN-Vernetzungsvorrichtung, die den spezifischen benannten Inhalt hostet, durch die SDN-Steuervorrichtung (104);
Einrichten (508) von Weiterleitungsregeln für den Pfad durch die SDN-Steuervorrichtung (104) ;
Schieben der Weiterleitungsregeln zu dem SDN-Knoten (110) durch die SDN-Steuervorrichtung (104);
Senden (510) der Anfrage durch den SDN-Knoten (110) an die ICN-Vernetzungsvorrichtung (114) unter Verwendung der Weiterleitungsregeln;
Einkapseln des spezifizierten benannten Inhalts in ein IP-Paket durch die ICN-Vernetzungsvorrichtung (114);
Senden (512A) des angeforderten spezifizierten benannten Inhalts durch die ICN-Vernetzungsvorrichtung (114) an einen Benutzer (116) unter Verwendung des SDN (102);
oder
Senden (512B) des angeforderten spezifizierten benannten Inhalts an den SDN-Knoten (110) durch die ICN-Vernetzungsvorrichtung (114), wobei der SDN-Knoten (110) den spezifizierten benannten Inhalt in ein IP-Paket einkapselt und das modifizierte Paket an den Benutzer (116) unter Verwendung des SDN (102) weiterleitet.

## Revendications

1. Procédé de transfert de données entre un réseau défini par logiciel, SND, et un réseau axé sur l'information, ICN, qui diffère du SDN, le procédé comprenant :
la réception (504), par un dispositif de commande SDN (104), d'une demande d'un nœud SDN (110) pour un contenu nommé spécifique stocké sur un ICN, la demande étant encapsulée dans un paquet de protocole Internet, IP ; le paquet IP comprenant une adresse IP prédéterminée dédiée aux communications ICN ;
la décapsulation, par le dispositif de commande SDN (104), du paquet IP en utilisant une pile de protocole IP ;
l'analyse, par le dispositif de commande SDN (104), de la demande pour obtenir le nom du contenu nommé spécifique;
la découverte (506), par le dispositif de commande SDN (104), d'un chemin jusqu'à un dispositif de réseau ICN hébergeant le contenu nommé spécifique en utilisant le nom ;
l'établissement (508), par le dispositif de commande SDN (104), de règles de transmission pour le chemin ;
la poussée, par le dispositif de commande SDN (104), des règles de transmission vers le nœud SDN (110) ;
l'envoi (510), par le nœud SDN (110), de la demande au dispositif de réseau ICN (114) à l'aide des règles de transmission ;
l'encapsulation, par le dispositif de réseau ICN (114), du contenu nommé spécifié dans un paquet IP ;
l'envoi (512A), par le dispositif de réseau ICN (114), du contenu nommé spécifié demandé à un utilisateur (116) à l'aide du SDN (102) ;
ou
l'envoi (512B), par le dispositif de réseau ICN (114) du contenu nommé spécifié demandé au nœud SDN (110), où le nœud SDN (110) encapsule le contenu nommé spécifié dans un paquet IP et transmet le paquet modifié à l'utilisateur (116) à l'aide du SDN (102).
